# EUROPEAN PATENT APPLICATION

(11) **EP 2 434 495 A1**
(43) Date of publication of application: **28.03.2012**
(21) Application number: 10777520.7
(22) Date of filing: 10.05.2010
(51) Int. Cl.: G21C 9/004, G21C 15/18, G21D 1/00

(54) **NUCLEAR REACTOR CONTAINMENT STRUCTURE**

(30) Priority: 20.05.2009 JP 2009122496
(71) Applicant: Mitsubishi Heavy Industries, Ltd., Tokyo 108-8215 (JP)
(72) Inventor: UDA, Nobuki, Hyogo 676-8686 (JP); FUKUDA, Hideo, Nagasaki 851-0392 (JP); MATSUOKA, Hiroshi, Tokyo 108-8215 (JP)
(74) Representative: Intès, Didier Gérard André
(86) International application number: PCT/JP2010/003171
(87) International publication number: WO 2010/134280

(57) **Abstract**

This reactor containment structure is provided with a reactor containment vessel (10), a reactor containment chamber (11) which is provided in the reactor containment vessel (10) and contains a nuclear power reactor, a pool (12) which is provided in the reactor containment vessel (10) below the reactor containment chamber (11) adjacently and holds an emergency cooling liquid (W), a plurality of opening parts (11b, 11c) allowing the emergency cooling liquid (W) to flow from the reactor containment chamber (11) into the pool (12), a sump (13) which is provided below the pool (12), a debris filtering body (14) which is installed in the sump (13) to filter debris (D) contained in the emergency cooling liquid (W), a pumping device (20) which sucks the emergency cooling liquid (W) from the sump (13) and discharges the emergency cooling liquid (W) into the reactor containment chamber (11), and a weir (30), which is provided to at least the opening part (11b) closest to the sump (13) among the plurality of opening parts (11b, 11c), thereby reducing the flow rate of the emergency cooling liquid (W) which flows from the reactor containment chamber (11) into the pool (12).

## Description

### TECHNICAL FIELD

The present invention relates to a reactor containment structure which is used in a pressurized water reactor.
Priority is claimed on japanese Patient Application No. 2009-122496, filed May 20, 2009, the content of which is incorporated herein by reference.

### BACKGROUND ART

As widely known, in a pressurized water reactor, pressure is applied so as not to boil a primary coolant (light water). The primary coolant is heater by thermal energy generates by nuclear fission reaction of a nuclear power reactor and the healed primacy coolant hated to a high temperature is fed to a steam generator. Thereby, a secondary coolant (light water) is boiled to notate a turbine generator with high temperature and high pressure steam, thereby generating electric power.

In such a pressurized water reactor, a safely structure is adopted in order to prevent a nuclear power reactor from being excessively heated on occurrence of a loss-of-prmary-coolant accident. The safety structure is provided mainly with a reactor containment vessel and a pumping device.
The reactor containment vessel is provided mainly with a reactor containment chamber, a pool and a sump. The reactor containment chamber contains a nuclear power reactor. The pool is provided inside the reactor containment vessel so as to be located below the reactor containment chamber adjacently, and an emergency cooling liquid is held in the pool. The sump is provided at a lower part of the pool. Further, at a slower part of the reactor containment chamber, there is provided an opening part four allowing the emergency cooling liquid inside the reactor containment chamber to flow into the pool.
The pumping device sucks the emergency cooling liquid from the sump and discharges the liquid from an upper part of the reactor containment chamber.
In the above-described safety structure, the emergency cooling liquid is sucked by the pumping device from the sump at the lower part of the pool and discharged from the upper part of the reactor containment chamber. The discharged emergency cooling liquid flows into the pool from the opening part of the reactor containment chamber. And, the discharged cooling liquid is again sucked by the pumping device to circulate inside the safely structure.

In the above-described safety structure, on occurrence of a loss-of-prmary-coolant accident, ejection of a high-pressure primacy coolant produces debris such as broken pieces of heat-insulating materials and metal pieces, and the debris flows into the pool. Therefore, a debris filtering body such as a sump screen is installed in the sump so that no debris is sucked into the pumping device. However, a large quantity of the debris adhered to the debris filtering body will result, in an increase in load of the pumping device or a reduction in circulation efficiency. Therefore, it is desirable to avoid adhesion of a large quantity of debris to the debris filtering, body.

For example, the reactor containment structure disclosed in Patent Document 1 below is provided at an opening on a floor of a reactor containment chamber with a second sump which functions as a temporary storage tank for emergency cooling water. Further, a second screen is installed at a part where water flows from the second sump to the pool. That is, debris is strapped by the second screen so as not to flow into the pool, thereby inhibiting adhesion of the debris to the sump screen.

### Prior Art Document

### [Patent Document]

Patent Document 1: Japanese Published Unexamined Patent Application No. H7-260977

### DISCLOSURE OF INVENTION

### [problems to be Solved by the Invention]

However, the above-described pressurized water reactor has a problem that it is impossibly to install the second sump at every opening. That is, it is structurally impossible to install the above-described second sump, for example, at an opening part of a companion way (hatch) provided between the pool and the reactor containment chamber. It is possible to make the opening part openable/closable. However, if the opening part of the companion way (hatch) is made openable/closable, there are problems such as a reduction in maintenance performance and a reduction in circulation efficiency of emergency cooling water.

The present invention provides a reactor containment structure which is capable of inhibiting adhesion of debris to a debris filtering body and simplifying, a configuration of an opening part.

### [Means for Solving the Problems]

In order to achieve the above object, the reactor containment structure of the present invention is configured with the following.
A reactor containment vessel which is provided with a reactor containment chamber having an opening part communicate with a lower floor at a lower part of a room containing a nuclear power reactor, a sump pool provided on the lower floor to store an emergency cooling liquid, and a sump provided at a lower part of the sump pool.
A debris filtering body which is installed in the sump.
A pump body which sucks the emergency cooling liquid from the sump to discharge the emergency cooling liquid from an upper part of the reactor containment chamber.
In the above-configured reactor containment structure, the emergency cooling liquid discharged from the upper part of the reactor containment chamber flows again into the sump pool from the opening part of the reactor containment chamber and the emergency cooling liquid circulates.
The reactor containment structure, of the present invention is provided at an opening part closest to the sump of a plurality of opening parts, with a weir for restricting the flow rate of the emergency cooling liquid which flows again into the sump pool from the opening part.
That is, in order to solve the above problems, the reactor containment structure of the present invrention is configured with the following.
A reactor containment vessel.
a reactor containment chamber which is provided in the reactor containment vessel and contains a nuclear power reactor.
a pool which is provided in the reactor containment vessel below the reactor containment chamber adjacently and holds an emergency cooling liquid.
a plurality of opening parts allowing the emergency cooling liquid to flow from the reactor containment chamber into the pool.
a sump which is provided below the pool.
a debris filtering body which is installed to the sump to filter debris contained in the emergency cooling liquid.
A pumping device which sucks the emergency cooling liquid from the sump and discharges the emergency cooling liquid into the reactor containment chamber.
A weir, which is provided to at least the opening part closet to the sump among the plurality of opening parts, thereby reducing the flow rate of the emergency cooling liquid which flows from the opening part into the pool.

According to this configuration, the flow rate of the emergency cooling liquid which flows into the pool through a weir-equipped opening part of the plurality of opening parts is restricted. Therefore, the flow rate of the emergency cooling liquid which flows into the pool from a weir-free opening part is increased. The weir-free opening part is spaced father away from the sump than the weir-equipped opening part. Therefore, most of the emergency cooling liquid which has been discharged into the reactor containment chamber flows into the pool through the weir-free opening part at a position spaced farther away from the sump compared to conventional cases, Thereby, a passage through which the emergency cooling liquid that has flowed into the pool moves to the sump is extended longer compared to conventional cases. Therefore, debris contained in the emergency cooling liquid which has flowed into the pool settles on its way to the sump more easily compared to conventional cases. As a result, it is less likely that the debris contained in the emergency cooling liquid reaches the debris filtering body.
In other words, by installing the weir, the flow rate of the emergency cooling liquid from an opening part, which is disposed at a position where the debris can easily reach the debris filtering body, is restricted. At the same time, the flow rate of the emergency cooling liquid from an opening part, which is disposed at a position where the debris reaches the debris filtering body with difficulty, is increased. Thereby, the debris is less likely to reach the debris filtering body compared to conventional castes, thus making it possible to decrease the amount of the debris reached the debris filtering body.
Further, the weir traps the debris at the opening part closest to the sump. Therefore, it is less likely that the debris flows into the pool from the opening part closest to the sump. Thereby, the debris which flows into the pool is decreased in amount and less likely to reach the debris filtering body.
According to the reactor containment structure of the present invention, it is therefore possible to inhibit debris reaching the debris filtering body and also inhibit adhesion of the debris to the debris filtering body. Further, as compared to a case where a sump structure or a sealing mechanism is provided on an opening part, it is possible to simplify its configuration. Thus, it is possible to inhibit adhesion of the debris to the debris filtering body and also simplify the configuration of the opening part.

In the reactor containment structure, the weir may be provided to two or more of the plurality of opening parts.
That is, the weir may be provided to two or more of the opening of the plurality of opening parts.
According to this configuration, it is possible to adjust flow rates of the opening parts, with a positional relationship of the sump taken in consideration. In other words, it is possible to adjust the flow rate distribution of an emergency coolant into the pool.
Still further, each of the weirs traps debris, thus making it possible to decrease the debris which flows into the pool compared to conventional cases.

In the reactor containment structure, of the opening parts provided with the weir, the weir of the opening part closer to the sump may be higher than the weir of the opening part farther away from the sump.
That is, of the plurality of weir-equipped opening parts, the weir of the opening part closer to the sump may be higher than the weir of the opening part spaced father away from the sump.
According to this configuration, it is possible to make fine adjustment of the flow rate distribution of the emergency coolant into the pool.

In the reactor containment structure, the thickness of the weir may increased gradually from the top to the bottom of the weir.
That is, the weir may be made gradually thicker so as to be thicker below than above.
In addition, the weir may be provided integrally with the reactor containment vessel.
That is, the weir may be provided integrally witch the reactor containment vessel.
According to the above-described configurations, it is possible to the strength of the weir. Thereby, even on collision witch large debris or on action of a great fluid force from the emergency cooling liquid, the weir can be prevented from breaking. Therefore, even in the case above, it is possible to continuously inhibit adhesion of debris to the debris filtering body.

### [Effect of the Invention]

According to the reactor containment structure of the present invention, it is possible to inhibit adhesion of debris to the debris filtering body and simplify a configuration of the opening part.

### BRIEF DESCRIPTION OF THE DRAWINGS

Fig. 1 is a schematic diagram of a reactor containment structure 1 of a first embodiment of the present invention.
Fig. 2 is a sectional view which shows major parts of the reactor containment structure 1 of the first embodiment of the present invention and a sectional view taken along the line I-I in Fig. 1.
Fig. 3 is a sectional view which shows major parts of a reactor containment structure 1 of the first embodiment of the present invention, and a sectional view taken along the line II-II in Fig. 1.
Fig. 4 is an enlarged sectional view which shows major parts of the reactor containment structure 1 of the first embodiment of the present invention.
Fig. 5 is a view which describes a first action of the reactor containment structure 1 of the first embodiment of the present invention.
Fig. 6 is a view which describes a second action of the reactor containment structure 1 of the first embodiment of the present invention.
Fig. 7 is a view which shows a modified example of the reactor containment structure 1 of the first embodiment of the present invention.
Fig. 8 is an enlarged sectional view which shows major parts of a reactor containment structure 2 of a second embodiment of the present invention.

### BEST MODE FOR CARRYING OUT THE INVENTION

Hereinafter, a description will be given of embodiments of the present invention with reference to the drawings.

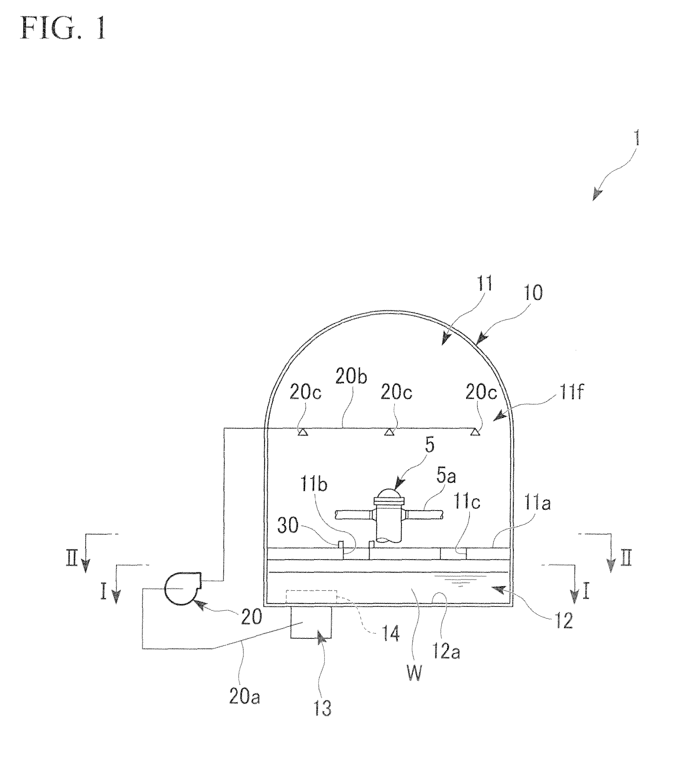

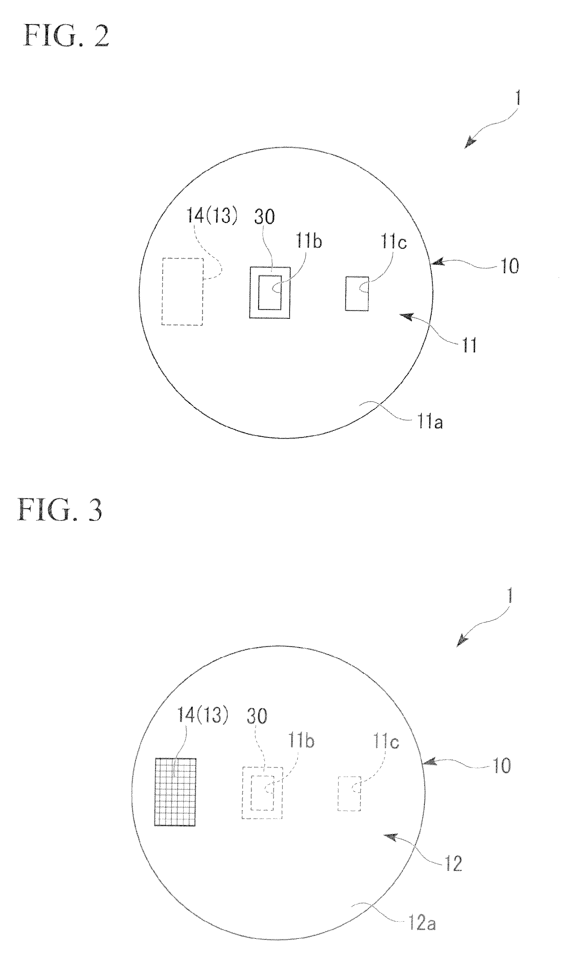

Fig. 1 is a schematic diagram of the reactor containment structure 1 of the first embodiment of the present invention. Fig. 2 is a sectional view taken along the line I-I in Fig. 1. Fig. 3 is a sectional view taken along the line II-II in Fig. 1.
As shown in Fig. 1, the reactor containment structure 1 is provided with a reactor containment vessel 10 which contains a nuclear power reactor 5 and also with a circulating pump (a pump body, a pumping device) 20.

The reactor containment vessel 10 is provided with a reactor containment chamber 11 which contains the nuclear power reactor 5 and also with a pool (sump pool) 12 in which emergency cooling water (an emergency cooling liquid) W is stored.
The reactor containment chamber 11 is provided inside the reactor containment vessel 10. The reactor containment chamber 11 contains a steam generator, a pressurizer, and so on, which are not illustrated, together with the nuclear power reactor 5. Rectangular opening parts 11b, 11c communicated with a lower floor are provided on a floor part 11a of the reactor containment chamber 11, as shown in Fig. 1 and Fig. 2.
A weir 30 provided to the opening part 11b will be described later.

As shown in Fig. 1, the pool 12 is provided inside the reactor containment vessel 10 so as to be below the reactor containment chamber 11 adjacently and in which emergency cooling water W is stored. That is, the pool 12 is provided on a lower floor of the reactor containment vessel 10 and, more specifically, provided on the basement floor of the reactor containment vessel 10.
As shown in Fig. 1 and Fig. 3, a circulation sump (sump, suction part) 13 is provided below a bottom part 12a of the pool 12. The circulation sump 13 is provided so as to be lower by one step than the bottom part 12a of the pool 12. The circulation sump 13 is provided with a sump screen (debris filtering body) 14 for filtering debris such as broken pieces contained in the emergency cooling water W. The sump screen 14 is installed so as to cover an opening part of the circulation sump 13.

The sump screen 14 is formed in the shape of a box in which one surface is opened. The sump screen 14 is disposed in such a manner that the opened side is superimposed on the opening part of the circulation sump 13. That is, the sump screen 14 covers the opening part of the circulation sump 13 in a condition where the opened side of the sump screen 14 is arranged lower in position than bottom side thereof. Further, as shown in Fig. 1, the sump screen 14 is submerged entirety for effectively utilizing its entire area in trapping broken pieces.
In place of the sump screen 14, there may be used a debris filtering body in which plate members halving through holes are stocked in a multiple stage.

As shown in Fig. 1, a circulating pump 20 is connected to one end part of a suction side piping 20a. The other end part of the suction side piping 20a is connected to the circulation sump 13 and opened at the circulation sump 13. Further, the circulating pump 20 is connected to a discharge side piping 20b. The discharge side piping 20b is connected to spray nozzles 20c mounted at an upper part 11f of the reactor containment chamber 11.

The reactor containment structure I actuates the circulating pump 20 on occurrence of a loss-of-primary-coolant occident in association with breakage of a piping part 5a of the nuclear power reactor 5. The circulating pump 20 sucks the emergency cooling water W stored in the pool 12 from the circulation sump 13. The circulating pump 20 discharges the sucked emergency cooling water W through the spray nozzles 20c provided at the upper part 11f of the reactor containment chamber 11. The circulating pump 20 discharges the emergency cooling water W through the spray nozzles 20c to supply the emergency cooling water W to the nuclear power reactor 5, thereby cooling the nuclear power reactor 5.
The emergency cooling water W which has cooled the nuclear power reactor 5 and runs off the floor part 11a flows into the pool 12 from the opening parts 11b, 11c. As described so far, the reactor containment structure 1 allows the emergency coaling water W of the pool 12 to circulate.

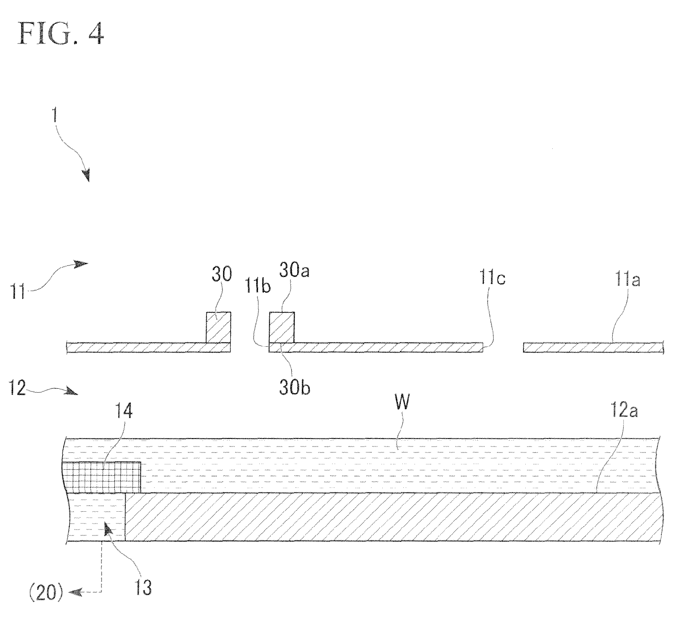

Fig. 4 is an enlarged sectional view of major parts of the reactor containment structure 1.
The reactor containment structure 1 is provided with the weir 30, as shown in Fig. 4. The weir 30 is provided so as to project upward from the floor part 11a. The weir 30 restricts the flow rate of the emergency cooling water W which flows into the pool 12 from the opening part 11b.

The weir 30 is provided at an edge part of the opening part 11b which is closest to the circulation sump 13 of the plurality of opening parts 11b, 11c. The weir 30 is not provided at the opening part 11c which is spaced farther away from the circulation sump 13 than the opening part 11b.

As shown in Fig. 2, the weir 30 is formed in the shape of a rectangle along the edge part of the opening part 11b. The weir 30 is provided on the periphery of the opening part 11b and surrounds the opening part 11b. As shown in Fig. 4, the longitudinal cross section of the weir 30 is rectangular. The weir 30 is substantially equal in horizontal thickness in a vertical direction from an upper end 30a to a lower end 30b.

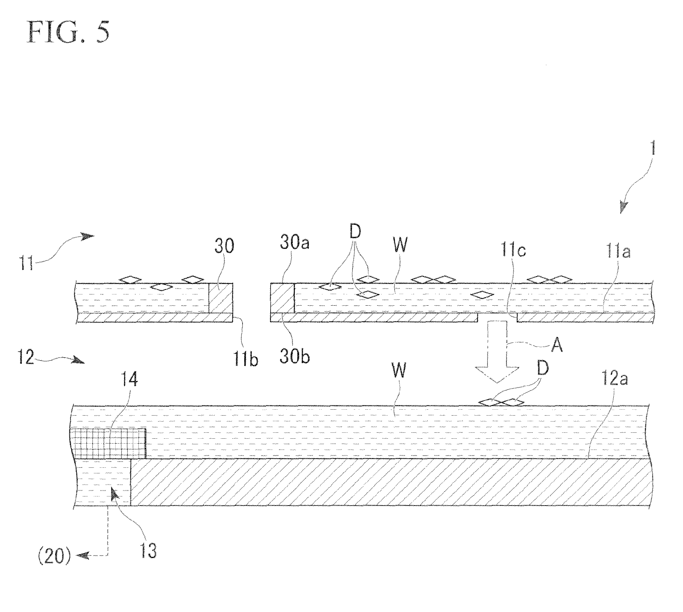

Next, a description will be given of actions of the reactor containment structure 1 with reference to the drawings.
On occurrence of a loss-ol-primary-coolant accident, a high-pressure primary coolant is ejected, by which debris D containing broken pieces of heat-insulting materials and metal pieces as shown in Fig. 5 is scattered in the reactor containment chamber 11.
At this time, the circulating pump 20 shown in Fig. 1 is actuated to suck the emergency cooling water W from the circulation sump 13. The circulating pump 20 discharges the sucked emergency cooling water W from the spray nozzles 20c provided at the upper part 11f of the reactor containment chamber 11 and supplies the emergency cooling water W to the nuclear power reactor 5. The emergency cooling water W which was supplied to the nuclear power reactor 5 runs off the floor part 12a after cooling the nuclear power reactor 5.

As shown in Fig. 5, the emergency cooling water W which has run off the floor part 12a flows from the opening part 11c into the pool 12 (indicated by an arrow A). In this case, the debris D scattered on the floor part 12a is made to flow by the emergency cooling water W and flows into the pool 12 together with the emergency cooling water
On the other hand, at the opening part 11b closest to the circulation sump 13, the emergency cooling water W is blocked by the weir 30. Thereby, flow of the emergency cooling water W from the opening part 11b into the pool 12 is temporarily inhibited.

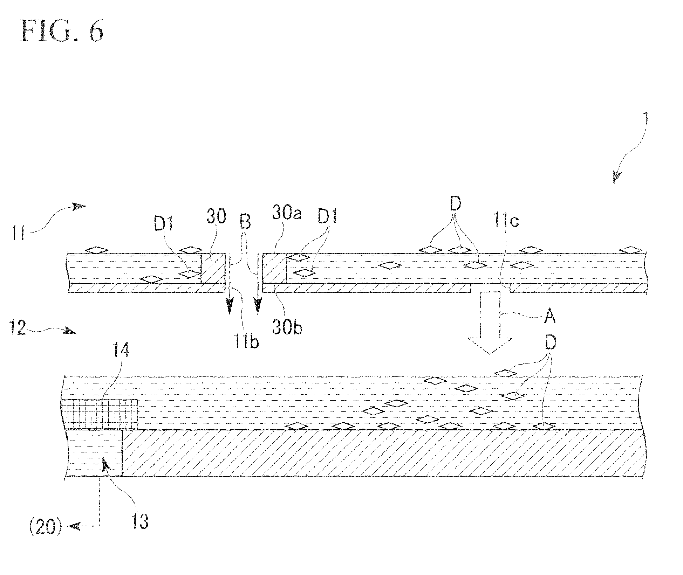

The emergency cooling water W which has flowed into the pool 12 from the opening part 11c spaced farther away from the circulation sump 13 than the opening part 11b flows toward the circulation sump 13.
As shown in Fig. 6, the debris D which has flowed into the pool 12 together with the emergency cooling water W flowing from the opening part 11c into the pool 12 flows so as to be stirred up inside the pool 12 due to impact of landing on the water. Thereafter, the debris D inside the pool 12 settles while the emergency cooling water W flows down to the circulation sump 13 and accumulates on the floor part 12a of the pool 12. That is, the debris D gradually accumulates on the floor part 12a as moving downward on a flow channel of the emergency cooling water W in the pool 12. Thereby, the debris D arrives at the screen 14 is decreased in amount.

In a where the flow rate of the emergency cooling water W flowing into the opening part 11a of the reactor containment chamber 11 is less than the amount of the emergency cooling water W running off the floor part 11a thereof, the emergency cooling water W is stored on the floor part 11a. Thereby, the water level of the emergency cooling water W from the floor part 11a rises. After a while, the water level of the emergency cooling water W from the floor part 11a becomes higher than the height of the weir 30 from the lower end 30b to the upper end 30a. Then, as shown in Fig. 6, the emergency cooling water W flows beyond the weir 30. The emergency cooling water W which has gone beyond the weir 30 flows into the pool 12 from the opening part 11b (indicated by an arrow B).
In this case, the weir 30 continue to block the debris D (Fig. 6) positioned below the upper end 30a of the weir 30. Therefore, the debris D is inhibited from flowing into the pool 12 from the opening part 11b closest to the circulation sump 13. As a result, adhesion of the debris D to the screen 14 is inhibited.

In the reactor containment structure 1 of the present embodiment, a large amount of the debris D does not reach the sump screen 14 and hardly adheres to the sump screen 14. Therefore, it is possible to present the circulating pump 20 from an increase in load and from a reduction in circulation efficiency of the emergency cooling water W. Thus, the emergency cooling water W is efficiently circulated to maintain the safety of the nuclear powder reactor 5.

As so far described, the reactor containment structure 1 is provided with the weir 30 which restricts the flow rate of the emergency cooling water W flowing into the pool 12 at the opening part 11b closest to the circulation sump 13 of two opening parts 11b, 11c. Therefore, the flow rate of the emergency cooling water W which flows into the pool 12 from the opening part 11c free of the weir 30 is increased.
The opening part 11c which is free of the weir 30 is spaced farther away from the circulation sump 13 than the opening part 11b which is equipped with the weir 30. Therefore, debris D which has flowed into the opening part 11c which is free of the weir 30 flows into a position spaced away from the circulation sump 13 of the pool 12. Thus, the debris D which has flowed into the pool 12 from the opening part 11c which is free of the weir 30 settles easily on the floor part 12b of the pool 12 on its way to the circulation sump 13 from a position where the debris D has flowed into the pool 12. Therefore, the debris D which has flowed into the pool 12 from the opening part 11c which is free of the weir 30 is less likely to reach the screen 14. On the other hand, when the debris D flows into the pool 12 from the opening part 11b closer to the circulation sump 13, the debris D is liable to reach the screen 14 before settling on the floor part 12a of the pool 12 and accumulates thereon. As a result, the debris D which has flowed into the pool 12 from the opening part 11b closer to the circulation sump 13 easily adheres to the screen 14.
In the present embodiment, the weir 30 is used to restrict the flow rate of she emergency cooling water W which flows into the opening part 11b at which the debris D that has passed through is allowed to easily arrive at the screen 14. At the same time, the weir 30 is used to increase the flow rate of the emergency cooling water W flowing into the opening part 11c at which the debris D that has passed through is less likely to reach the screen 14. Therefore, it is possible to settle most of the debris D that flows into the pool 12 and to decrease the amount of the debris D reaching the screen 14.

Further, the weir 30 traps the debris D at the opening part 11b closest to the circulation sump 13. Therefore, the debris D is less likely to flow in from the opening part 11b and also less likely to reach the screen 14.
Thus, the reactor containment structure 1 is able to decrease the debris D reaching the screen 14 and inhibit adhesion of the debris D to the screen 14.

Still further, it is possible to simplify the opening parts by being able to omit the sump structure, provided to the opening parts 11b, 11c or the sealing mechanism.
As a result, according to the reactor containment structure 1, it is possible to inhibit adhesion of debris D to the screen 14 and also simplify the configuration of the opening parts 11b, 11c.

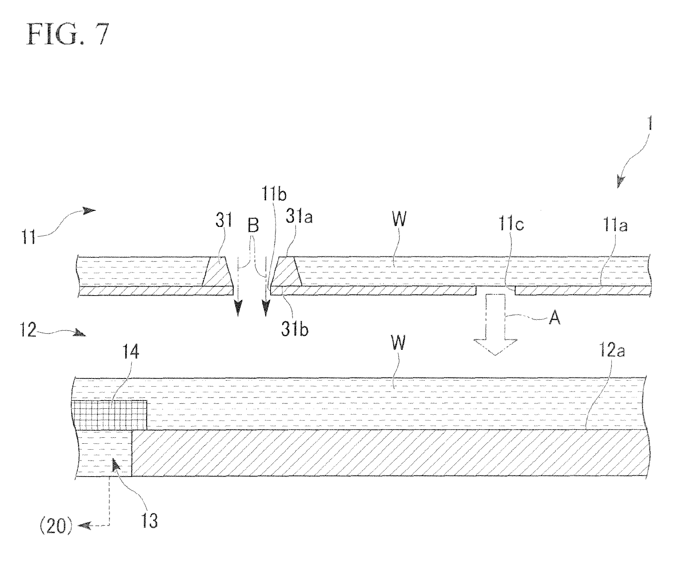

Fig. 7 is an enlarged sectional view of a weir 31 which is a modified example of the above-described weir 30.
As shown in Fig. 7, the weir 31 is different from the weir 30 in that the weir 31 is gradually increased in horizontal thickness from an upper end 31a toward a lower end 31b thereof.
Since the weir 31 of the modified example is increased in horizontal thickness as it gets closer to the lower end 31b, there is a decrease in stress which is generated in relation to horizontal loads along the floor part 11a as it gets closer to the lower end 31b. The weir 31 may be subjected to collision with large debris D or a great fluid force from the emergency cooling liquid W. Even in the case above, according to the present modified example, it is possible to present the weir 31 from breaking and continuously inhibit adhesion of the debris D to the sump screen 14.

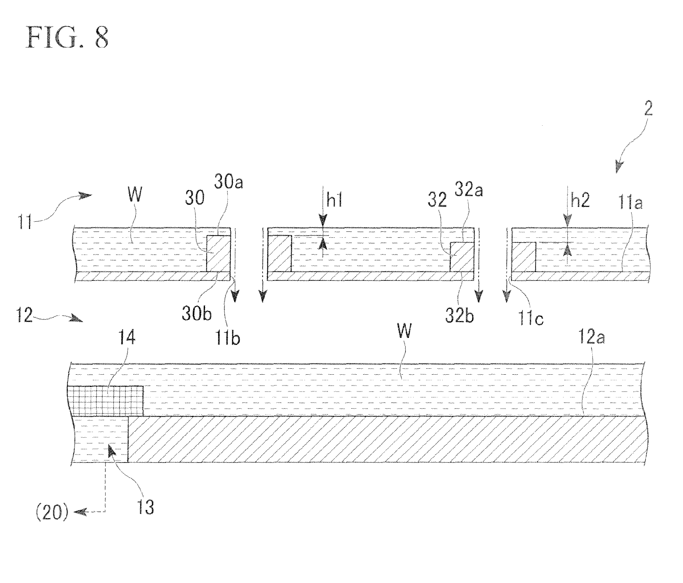

Fig. 8 is an enlarged sectional view which shows major parts of a reactor containment structure 2 of a second embodiment of the present invention. It is noted that in Fig. 8, components similar to those described in Fig. 1 to Fig. 7 are given the same reference numerals, with a description omitted here.

The reactor containment structure 2 is provided with a weir 30 provided at an opening part 11b closest to a circulation sump 13 and a weir 32 provided at an opening part 11c spaced farther away from the circulation sump 13 than the opening part 11b.
The weir 32 is formed in the shape of a rectangle along an edge part of the opening part 11c, as with the weir 30 shown in Fig. 2. The weir 32 is provided on the periphery of the opening part 11c and surrounds the opening part 11c. As shown in Fig. 4, the longitudinal cross section of the weir 32 is rectangular. The weir 32 is substantially equal in horizontal thickness from an upper end 32a to a lower end 32b.

The height of the weir 32 from the lower end 32b to the upper end 32a provided at the opening part 11c spaced away from the circulation sump 13 is lower than that of the weir 30 from the lower end 30b to the upper end 30a provided at the opening part 11b closer to the circulation sump 13.
Further, when the emergency cooling water W circulates stably and develops into a stationary state, the water level of the emergency cooling water W from the floor part 11a to the water surface is substantially constant. The weirs 30, 32 are set in such a manner that distances h1 and h2 from the upper ends 30a and 32a to the water surface of the emergency cooling water W in this stationary state are predetermined valuers.

When the emergency cooling water W circulates in a stationary state, the emergency cooling water W runs beyond the weirs 30, 31, flows into the opening parts 11b, 11c and flows into the pool 12.
At this tine, the weirs 30 and 32 continue to block debris D (Fig. 6) positioned below the upper ends 30a and 32a of the weirs 30 and 32. Therefore, the debris D is inhibited from flowing from the opening parts 11b, 11c into the pool 12 and adhesion of the debris D to the screen 14 is inhibited.

Further, since the weir 32 is lower than the weir 30, the emergency cooling water W that flows into the opening part 11c becomes greater in flow rate than the emergency cooling liquid W that flows into the opening part 11b. More specifically, the respective flow rates of the emergency cooling water W which flows into the opening parts 11b, 11c are proportional to 1.5th power of the distances h1, h2. That is, the flow rate of the emergency cooling water W which flows into the opening part 11c is grater by the flow rate proportional to 1.5th power of a difference between the distance h1 and the distance h2 than the flow rate of the emergency cooling water W which flows into the opening part 11b.

That is, the flow rate of the emergency cooling water W which flows into the opening part 11b at which debris D contained in the emergency cooling water W is allowed to easily reach the screen 14 is decreased compared to conventional cases. Therefore, the debris D which flows into the pool 12 via the opening part 11b is decreased in amount.
On the other hand, the flow rate of the emergency cooling water W which flows into the opening part 11c at which the debris D contained in the emergency cooling water W is less likely to reach the screen 14 is increased compared to conventional cases. Therefore, the debris D flows into the pool 12 from the opening part 11c is increased in amount. The debris D which has flowed the pool 12 from the opening part 11c settles mostly on its way to the circulation sump 13.

Therefore, the debris D hardly reaches the sump screen 14 and hardly adheres to the sump screen 14. Thus, the circulating pump 20 is inhibited from an increase in load and also the emergency cooling water W is inhibited from a reduction in circulation efficiency. Thereby, the emergency cooling water W efficiently circulates to maintain good safely of the nuclear rower reactor 5.

As so far describes, according to the reactor containment structure, 2, of two opening parts 11b, 11c, the weir 30 of the opening part 11b closer to the circulation sump 13 is higher than the weir 32 of the opening part 11c spaced away from the circulation sump 13. Therefore, as with the first embodiment, the emergency cooling water W which flows into the opening part I 1c spaced away from the circulation sump 13 is increased in flow rate, while the emergency cooling liquid W which flows into the opening part I 1b close to the circulation sump 13 is decreased in flow rate. As a result, according to the reactor containment structure 2 of the present embodiment, it is possible to obtain effects similar to those of the reactor containment structure 1 of the first embodiment.

Further, in the reactor containment structure 2 of the present embodiment, the weir 30 is different in height from the weir 32. therefore, the flow rates of the emergency cooling liquid W which flows into the opening parts 11b, 11c are adjusted by the weir 30. 32. It is, thereby, possible to adjust the flow rate distribution of the emergency cooling water W into the pool 12.

In the present embodiment, a description has been given of the reactor, containment chamber 11 which has two opening parts 11b, 11c. However, three or more of the opening parts may be provided. In this case, there may be provided an opening part which is free of the weir. Further, of any given two opening, parts, the weir of one opening part closer to the circulation sump 13 is made higher than the weir of the other opening part spaced away from the circulation sump 13. It is, thereby, possible two inhibit arrival of the debris D at the screen 14.

Procedures, shapes and combinations of individual member shown in the above-described embodiments are only examples and can be modified in carious ways based on design requirement, and so on, within a scope not departing from the gist of the present intention.
For example, in the above-described embodiment, the weir 30 surrounds the opening part 11b. However, where an opening part is formed in the vicinity of pother structures, for example, a wall part, the opening part may be surrounded by the wall part and the weir. That is, it is not allays necessary to surround the opening part with only the weir.

A description has been so far made for preferred embodiments of the present intention, to which the present invention shall not be, however, restricted. The present invention may be subjected to addition, omission, replacement and other modifications of the configuration within a scope not departing from the gist of the present invention. The present invention shall not be restricted to the above description but will be restricted only by the scope of the adhered claims.

The present invention relates to a reactor containment structure which is provided with a reactor containment vessel, a reactor containment chamber which is provided inside the reactor containment vessel to contain a nuclear power reactor, a pool which is provided inside the reactor containment vessel so as to be below the reactor containment chamber adjacently and in which an emergency cooling liquid is stored, a plurality of opening parts which allow the emergency cooling liquid to flow from the reactor containment chamber into the pool, a sump which is provided below the pool, a debris filtering body which is installed in the sump to filter debris contained in the emergency cooling liquid, a pumping device which sucks the emergency cooling liquid from the sump and discharges the emergency cooling liquid into the reactor containment chamber, and a weir which is provided at, at least an opening part closest to the sump of the plurality of opening parts, thereby restricting the flow rate of the emergency cooling liquid which flows from the opening part into the pool. According to the reactor containment structure of the present invention, it is possible to inhibit adhesion of debris to the debris filtering body and simplify a configuration of the opening part at a companion way provided between the pool and the reactor containment chamber,

### [Description of Reference Numerals]

1: reactor containment structure
5: nuclear power reactor
10: reactor containment vessel
11: reactor containment chamber
11a: floor part
11b to 11d: opening part
11d: upper part
12: pool
13: circulation sump (suction part)
14: sump screen (debris filtering body)
20: circulating pump (pump body, pumping, device)
W: emergency cooling water (emergency cooling liquid)

## Claims

1. A reactor containment structure comprising:
a reactor containment vessel;
a reactor containment chamber which is provided in the reactor containment vessel and contains a nuclear power reactor;
a pool which is provided in the reactor containment vessel below the reactor containment chamber adjacently and holds an emergency cooling liquid;
a plurality of opening parts allowing the emergency cooling liquid to flow from the reactor containment chamber into the pool:
a sump which is provided below the pool;
a debris filtering body which is installed in the sump to filter debris contained in the emergency cooling liquid;
a pumping device which sucks the emergency cooling liquid from the sump and discharges the emergency cooling liquid into the reactor containment chamber; and
a weir, which is provided to at least the opening part closest to the sump among the plurality of opening parts, thereby reducing the flow rate of the emergency cooling liquid which flows from the opening part into the pool.

2. A reactor containment structure according to claim 1, wherein the weir is provided to two or more of the plurality of opening parts.

3. A reactor containment structure according to claim 2. wherein, of the opening parts provided witch the weir, the weir of the opening part closer to the sump is higher than the weir of the opening part farther away from the sump.

4. A reactor containment structure according to any one of claim 1 to claim 3. wherein the thickness of the weir increases gradually from the top to the bottom of the weir.

5. A reactor containment structure according to any one of claims 1 to 4, wherein the weir is provided integrally with the reactor containment vessel.
